# EUROPEAN PATENT APPLICATION

(11) **EP 3 587 040 A1**
(43) Date of publication of application: **01.01.2020**
(21) Application number: 17898284.9
(22) Date of filing: 21.02.2017
(51) Int. Cl.: B25J 9/06

(54) **MAIN CONTROL ARM AND ROBOT**

(71) Applicant: Microport (Shanghai) Medbot Co., Ltd., Shanghai 201203 (CN)
(72) Inventor: HE, Chao, Shanghai 201203 (CN); YUAN, Shuai, Shanghai 201203 (CN)
(74) Representative: Patentship Patentanwaltsgesellschaft mbH
(86) International application number: PCT/CN2017/074293
(87) International publication number: WO 2018/152678

(57) **Abstract**

A master arm and a robot. The master arm comprises: a support member (1); a shoulder member (2) rotatably connected to the support member (1); an elbow member (4); an upper arm member (3) rotatably connected to the shoulder member (2) and the elbow member (4); and a forearm member (5) connected to the elbow member (4), wherein the upper arm member (3) comprises a primary upper arm part (30) and a secondary upper arm part (31); a parallelogram can be formed by virtual lines sequentially connecting connection points of the primary upper arm part (30), the secondary upper arm part (31), the shoulder member (2), and the elbow member (4) with straight lines; a first rotational joint is arranged between the support member (1) and the shoulder member (2), a second rotational joint is arranged between the primary upper arm part (30) and the shoulder member (2), and a third rotational joint is arranged between the elbow member (4) and the forearm member (5), wherein an axis of the first rotational joint is parallel to an axis of the third rotational joint, and an axis of the second rotational joint is perpendicular to a plane defined by the axis of the first rotational joint and the axis of the third rotational joint. The master arm based on the parallelogram structure and the joint arrangement mode occupies little space, has a stable structure and high stiffness, and can achieve complete balance of the self-gravity of the master arm, thereby improving the accuracy, flexibility, and comfort of the operation of the master arm.

## Description

### TECHNICAL FIELD

The present disclosure relates to the field of medical devices, and in particular, to a robotic arm and a robot.

### BACKGROUND

With the wide application of virtual reality technology in the fields of medical robots, industrial robots, etc. and master-slave operation modes, the research and development of robotic arms that act as the input/output of robots has received more and more attention. The master arm is a main operation input device in the master-slave operation mode. This type of the input devices can directly interact with operators about motion information and force information, and can provide relatively intuitive operation control.

There are mainly two types of master arms that are commonly used in the world:
(1) Series structure: components are connected in series by means of joints, which has several advantages, such as larger working space, more flexible control, but has serval disadvantages, such as unrealizable self-gravity balance, larger inertia force, poorer stiffness and adjustment accuracy and so on.
(2) Parallel structure: each of the components is arranged parallelly to one another, and is generally connected to a base, which has several advantages, such as higher stiffness, higher precision, better symmetry, compact structure, better dynamic performance, but has several disadvantages, such as larger occupied space, smaller working space, and more difficult calculation of algorithms.

It is known by the inventor that the Phantom series of America Gemaqic (previously Sensable) and the sigma, omega and delta series of Swiss Force Dimension are widely and successfully applied in the world nowadays. The products of America Gemaqic are the series structure and the products of Swiss Force Dimension are the parallel structure, respectively, and thus also have the problems of the foregoing. Certainly, there are some other master arm structures in the world, but most of them are research and development designs for specific systems, and have poor universality.

It is known by the inventor that the research on the master arm in China is still in its initial stage, and domestic related technical researchers have been conducting research in this area. However, no more competitive and influential product is produced. Therefore, it is of great significance for China to design a master arm with better performance.

### SUMMARY OF THE DISCLOSURE

Some embodiments of the present disclosure are to provide a master arm and a robot, to overcome the disadvantages, such as larger occupied space, poorer stiffness and adjustment accuracy of the master arms in the prior art.

To solve the at least one of the foregoing technical problems, some embodiments of the present disclosure provide a master arm, comprising: a support member; a shoulder member rotatably connected to the support member; an elbow member; an upper arm member rotatably connected to the shoulder member and the elbow member; and a forearm member rotatably connected to the elbow member, wherein,
the upper arm member comprises a primary upper arm part and a secondary upper arm part, and a parallelogram can be formed by virtual lines sequentially connecting connection points of the primary upper arm part, the secondary upper arm part, the shoulder member, and the elbow member with straight lines;
a first rotational joint is arranged between the support member and the shoulder member, a second rotational joint is arranged between the primary upper arm part and the shoulder member, and a third rotational joint is arranged between the elbow member and the forearm member, wherein an axis of the first rotational joint is parallel to an axis of the third rotational joint, and an axis of the second rotational joint is perpendicular to a plane defined by the axis of the first rotational joint and the axis of the third rotational joint.

Optionally, in the master arm, the primary upper arm part and the secondary upper arm part are selected as connecting rods.

Optionally, in the master arm, the primary upper arm part and the secondary upper arm part are straight, and are parallel to each other.

Optionally, in the master arm, the forearm member is horizontally disposed.

Optionally, in the master arm, the primary upper arm part is a connecting rod, and the secondary upper arm part is a flexible transmission structure; the flexible transmission structure comprises a first flexible transmission joint member, a second flexible transmission joint member, and a flexible transmission transfer member sleeved over and fixedly connected to each of the first flexible transmission joint member and the second flexible transmission joint member, respectively; and the first flexible transmission joint member is fixedly connected to the shoulder member, and the second flexible transmission joint member is fixedly connected to the elbow member.

Optionally, the master arm further comprises a rotation shaft member and a rotation shaft mounting member, wherein the forearm member and the elbow member are rotatably connected by means of a group of rotation shaft member and rotation shaft mounting member which are matched and connected, to form the third rotational joint.

Optionally, the master arm further comprises a rotation shaft member and a rotation shaft mounting member, wherein the support member and the shoulder member are rotatably connected by means of a group of rotation shaft member and rotation shaft mounting member which are matched and connected, to form the first rotational joint.

Optionally, the master arm further comprises a rotation shaft member and a rotation shaft mounting member, wherein the shoulder member and the upper arm member are rotatably connected by means of one or more groups of rotation shaft member and rotation shaft mounting member which are matched and connected; and the upper arm member and the elbow member are rotatably connected by means of another one or more groups of rotation shaft members and rotation shaft mounting members which are matched and connected.

Optionally, the master arm further comprises a posture adjustment member disposed on the forearm member.

Optionally, the master arm further comprises a gravity balancing member connected to the upper arm member.

Optionally, in the master arm, the gravity balancing member is a counter weight, and the counter weight is connected to an extended section of the primary upper arm part.

The other embodiments of the present disclosure also disclose a robot, comprising the master arm.

In the master arm and the robot provided by the embodiments of the present disclosure, the master arm comprises: a support member; a shoulder member rotatably connected to the support member; an elbow member; an upper arm member rotatably connected to the shoulder member and the elbow member respectively; and a forearm member connected to the elbow member, wherein the upper arm member comprises a primary upper arm part and a secondary upper arm part; a parallelogram can be formed by virtual lines sequentially connecting connection points of the primary upper arm part, the secondary upper arm part, the shoulder member, and the elbow member; a first rotational joint is formed by the support member and the shoulder member, a third rotational joint is formed by the elbow member and the forearm member, and a second rotational joint is formed by the primary upper arm part and the shoulder member, wherein an axis of the first rotational joint is parallel to an axis of the third rotational joint, and an axis of the second rotational joint is perpendicular to a plane defined by the axis of the first rotational joint and the axis of the third rotational joint. The master arm based on the parallelogram structure and the joint arrangement occupies littler space, has a more stable structure and higher stiffness, and can achieve complete balance of the self-gravity, thereby improving the accuracy, flexibility, and comfort of the operation of the master arm.

### BRIEF DESCRIPTION OF THE DRAWINGS

FIG. 1 is a front view of a master arm according to Embodiment 1 of the present disclosure;
FIG. 2a is a side view of the master arm in the case that an upper arm member is in a horizontal state according to Embodiment 1 of the present disclosure;
FIG. 2b is a side view of the master arm in the case that the upper arm member is in an upward swing state according to Embodiment 1 of the present disclosure;
FIG. 2c is a side view of the master arm in the case that the upper arm member is in a downward swing state according to Embodiment 1 of the present disclosure; and
FIG. 3 is a front view of a master arm according to Embodiment 2 of the present disclosure.

In the drawings, support member 1; shoulder member 2; upper arm member 3; elbow member 4; primary upper arm part 30; secondary upper arm part 31; first flexible transmission joint member 311; second flexible transmission joint member 312; flexible transmission transfer member 310; forearm member 5; posture adjustment member 6; gravity balancing member 7; rotation shaft members 2-1, 2-2, 4-1,4-2; shoulder rotational joint R1; upper arm rotational joints R2, R2'; elbow rotational joint R3.

### DETAILED DESCRIPTION

The master arm and the robot provided by the some embodiments of the present disclosure will be further described in detail below with reference to the accompanying drawings and specific embodiments. Advantages and features of the present disclosure will be apparent from the description and appended claims below. It should be noted that the drawings are in a very simplified form and use a non-precise scale, and are only intended to conveniently and explicitly assist in describing the embodiments of the present disclosure.

Before specifying the present disclosure, the main principle and concept of the some embodiments of the present disclosure will be described herein first. Specifically, by means of the parallelogram structure formed by virtual lines sequentially connecting the connection points of the primary upper arm part, the secondary upper arm part, the shoulder member, and the elbow member, and the arrangement of three rotational joints, the posture of the forearm member connected to the elbow member is ensured to be more stable during the movement of the master arm, so as to avoid the impact caused by the upper arm member in its dynamic swinging on the posture adjustment member disposed on the forearm member, thereby increasing the flexibility and comfort of the operation of the master arm.

### Embodiment 1

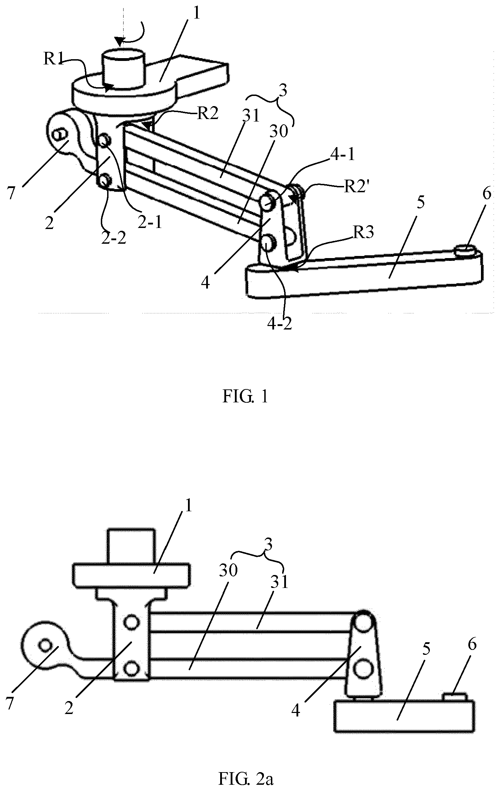

Referring to FIG. 1, a front view of a master arm according to Embodiment 1 of the present disclosure is illustrated. As shown in FIG. 1, the master arm comprises: a support member 1; a shoulder member 2 rotatably connected to the support member 1; an elbow member 4; an upper arm member 3 rotatably connected to the shoulder member 2 and the elbow member 4 respectively; and a forearm member 5 connected to the elbow member 4, wherein the upper arm member 3 comprises a primary upper arm part 30 and a secondary upper arm part 31; a parallelogram can be formed by virtual lines sequentially connecting connection points of the primary upper arm part 30, the secondary upper arm part 31, the shoulder member 2, and the elbow member 4; a first rotational joint is arranged between the support member 1 and the shoulder member 2, a third rotational joint is arranged between the elbow member 4 and the forearm member 5, and a second rotational joint is arranged between the primary upper arm part 30 and the shoulder member 2, wherein an axis of the first rotational joint is parallel to an axis of the third rotational joint, and an axis of the second rotational joint is perpendicular to a plane defined by the axis of the first rotational joint and the axis of the third rotational joint. Preferably, the forearm member 5 is horizontally disposed. In this embodiment, the primary upper arm part 30 and the secondary upper arm part 31 are both connecting rods which are straight, and the primary upper arm part 30 and the secondary upper arm part 31 are parallel to each other. In addition, the elbow member 4 is disposed perpendicular to the horizontal plane. In the present disclosure, the detailed structures of the shoulder member 2 and the elbow member 4 may be of various structural types such as a U shape, depending on the application.

To make the master arm have more flexible operation, the master arm in the present embodiment has three degrees of freedom, which are implemented sequentially by a shoulder rotational joint R1 that is horizontally rotatable, an upper arm rotational joint R2 that is vertically rotatable, and an elbow rotational joint R3 that is horizontally rotatable. The master arm can form a three-dimensional operating space by means of the movements of the three joints.

More specifically, the support member 1 and the shoulder member 2 are rotatably connected by means of a group of rotation shaft members and rotation shaft mounting members which are matched and connected, to form the shoulder rotational joint R1. For example, one end of the shoulder member 2 close to the support member 1 is provided with a rotation shaft member that is matched and connected to a rotation shaft mounting member (for example, a bearing) disposed on the support member 1, to form the shoulder rotational joint R1. The forearm member 5 and the elbow member 4 are rotatably connected by means of a group of rotation shaft members and rotation shaft mounting members which are matched and connected, to form the elbow rotational joint R3. For example, one end of the elbow member 4 close to the forearm member 5 is provided with a rotation shaft member that is matched and connected to a rotation shaft mounting member (for example, a bearing) disposed on the forearm member 5, to form the elbow rotational joint R3. The shoulder member 2 and the upper arm member 3 are rotatably connected by means of one or more groups of rotation shaft members and rotation shaft mounting members which are matched and connected, to form the upper arm rotational joint R2. The upper arm member 3 and the elbow member 4 are rotatably connected by means of another one or more groups of rotation shaft members and rotation shaft mounting members which are matched and connected, to form the upper arm rotational joint R2'. For example, the shoulder member 2 and the elbow member 4 are provided with a rotation shaft mounting member respectively (for example, a bearing). The rotation shaft member fixedly connected to the upper arm member 3 is connected to the rotation shaft mounting members of the shoulder member 2 and the elbow member 4 respectively, so that the upper arm member 3 is rotatably connected to the rotation shaft shoulder member 2 and the elbow member 4, to form the upper arm rotational joints R2, R2'. For another example, two groups of rotation shaft mounting members (the specific positions of the rotation shaft mounting members are not visible in the drawings, and only the rotation shaft members 2-1, 2-2 matched and used with the rotation shaft mounting members can be seen) are disposed on the shoulder member 2. Two groups of rotation shaft mounting members (the specific positions of the rotation shaft mounting members are not visible in the drawings, and only the rotation shaft members 4-1, 4-2 matched and used with the rotation shaft mounting members can be seen) are disposed on the elbow member 4. One end of the primary upper arm part 30 is matched and connected, by means of the rotation shaft member 2-2, to a group of rotation shaft mounting members (the specific positions of the rotation shaft mounting members are not visible in the drawings, and only the rotation shaft member 2-2 matched and used with the rotation shaft mounting members can be seen) disposed on the shoulder member 2, and the other end of the primary upper arm part 30 is matched and connected to, by means of the rotation shaft member 4-2, to a group of rotation shaft mounting members disposed on the elbow member 4. One end of the secondary upper arm part 31 is matched and connected, by means of the rotation shaft member 2-1, to another group of rotation shaft mounting members disposed on the shoulder member 2, and the other end of the secondary upper arm part 31 is matched and connected, by means of the rotation shaft member 4-1, to another group of rotation shaft mounting members disposed on the elbow member 4. It is obvious that the rotation shaft mounting member is disposed at the end of the upper arm member 3, and the rotation shaft member disposed on the shoulder member 2 or on the elbow member 4 is connected to the rotation shaft mounting member disposed at the end of the upper arm member 3, so that the upper arm member 3 is rotatably connected to the shoulder member 2 and the elbow member 4 to form an upper arm rotational joint respectively.

The primary upper arm part 30 and the secondary upper arm part 31 are rotatably connected to the shoulder member 2 to form a first upper arm rotational joint and a second upper arm rotational joint respectively. The primary upper arm part 30 and the secondary upper arm part 31 are rotatably connected to the elbow member 4 to form a third upper arm rotational joint and a fourth upper arm rotational joint respectively. Since the shoulder member 2, the primary upper arm part 30, the secondary upper arm part 31, and the elbow member 4 together form a parallelogram structure. According to the characteristics of the parallelogram connecting rod structure, the four upper arm rotational joints are coupled to rotate, and according to the effect of coupling, it can only provide one degree of freedom. Therefore, the four upper arm rotational joints together form one degree of freedom.

In the application of the master arm of the embodiment, due to the arrangement of the joints and the presence of the parallelogram structure, the forearm member 5 can always be maintained in a posture that is horizontal during the movement of the upper arm member 3, so that the operator is able to operate the master arm in a more comfortable and accurate way. Specifically referring to FIGs. 2a to 2c, FIG. 2a is a side view of the master arm in the case that the upper arm member 3 is in a horizontal state according to Embodiment 1 of the present disclosure. In this case, the forearm member 5 is in a posture parallel to the horizontal plane.

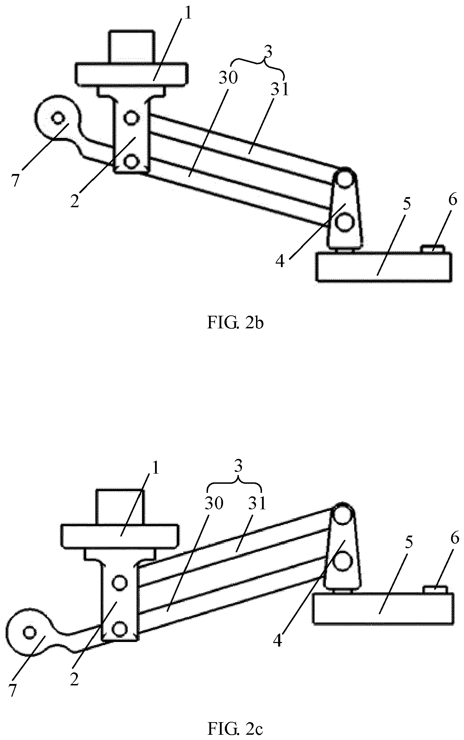

FIG. 2b is a side view of the master arm in the case that the upper arm member 3 is in an upward swing state according to Embodiment 1 of the present disclosure. Since the shoulder member and the elbow member 4 are kept parallel to each other and perpendicular to the horizontal plane, the change in the state of the upper arm member 3 does not affect the posture of the forearm member 5 when the upper arm member 3 is in the upward swing state, and the forearm member 5 maintains the posture parallel to the horizontal plane.

FIG. 2c is a side view of the master arm in the case that the upper arm member 3 is in a downward swing state according to Embodiment 1 of the present disclosure. Since the shoulder member and the elbow member 4 are kept parallel to each other and perpendicular to the horizontal plane, the change in the state of the upper arm member 3 does not affect the posture of the forearm member 5 when the upper arm member 3 is in the downward swing state, and the forearm member 5 maintains the posture parallel to the horizontal plane.

Further, the master arm includes a posture adjustment member 6 disposed on the forearm member 5 to control the posture of a surgical instrument at the patient end. The purpose of adjusting the three joints of the master arm is to finally achieve precise position adjustment of the posture adjustment member. Since the forearm member 5 is always disposed horizontally, the posture adjustment member 6 is also disposed horizontally so that the operator can flexibly adjust the posture adjustment member to the desired posture.

Further, the master arm further includes a gravity balancing member 7 connected to the upper arm member 3 to achieve the balance of gravity of the master arm. In this embodiment, one end of the primary upper arm part 30 close to the shoulder member 2 has an extended section. The gravity balancing member 7 is a counter weight, and the counter weight is connected to the extended section. Due to the presence of the gravity balancing member 7, the master arm can better achieve self-gravity balance.

### Embodiment 2

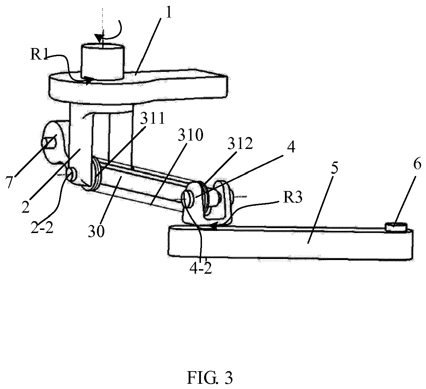

Referring to FIG. 3, a front view of a master arm according to Embodiment 2 of the present disclosure is illustrated. Embodiment 2 differs from Embodiment 1 in the specific structure of the secondary upper arm part 31 of the upper arm member 3. As shown in FIG. 3, the primary upper arm part 30 is a connecting rod, and the secondary upper arm part 31 is a flexible transmission structure. The flexible transmission structure includes a first flexible transmission joint member 311, a second flexible transmission joint member 312, and a flexible transmission transfer member 310 sleeved over and fixedly connected to each of the first flexible transmission joint member 311 and the second flexible transmission joint member 312. "Fixed" herein can be understood as: the friction between the flexible transmission transfer member 310 and the first flexible transmission joint member 311 as well as the second flexible transmission joint member 312 is sufficiently large that no relative displacement occurs in the contact portion between the flexible transmission transfer member 310 and the first flexible transmission joint member 311 as well as the second flexible transmission joint member 312. In the alternative embodiment, "Fixed" herein can also be understood as: the flexible transmission transfer member 310 includes two flexible transmission transfer sub-members, where each flexible transmission transfer sub-member is fixed to the same side of the first flexible transmission joint member 311 and the second flexible transmission joint member 312. The length of the flexible transmission transfer sub-member between the fixed points depends on the range of swing of the master arm. These solutions fall within the protection scope of the present disclosure.

More specifically, one group of rotation shaft mounting members (the specific positions of the rotation shaft mounting members are not visible in the drawings, and only the rotation shaft member 2-2 matched and used with the rotation shaft mounting members can be seen) is disposed on the shoulder member 2. One group of rotation shaft mounting members (the specific positions of the rotation shaft mounting members are not visible in the drawings, and only the rotation shaft member 4-2 matched and used with the rotation shaft mounting members can be seen) is disposed on the elbow member 4. Both the first flexible transmission joint member 311 and one end of the primary upper arm part 30 connect to the shoulder member 2, by means of the rotation shaft member 2-2 matched and connected to one group of rotation shaft mounting members disposed on the shoulder member 2, and the first flexible transmission joint member 311 is fixed to the shoulder member 2. Both the second flexible transmission joint member 312 and the other end of the primary upper arm part 30 connect to the elbow member 4, by means of the rotation shaft member 4-2 matched and connected to one group of rotation shaft mounting members disposed on the elbow member 4, and the second flexible transmission joint member 312 is fixed to the elbow member 4. By means of the rotation shaft mounting members, the rotation between the members can be more stable with low loss. For example, the rotation shaft mounting member described herein is selected as a bearing. The present disclosure does not particularly limit the selection of the bearing, and those skilled in the art can select a specific type of bearing according to the prior art. Moreover, it should be recognized that the rotation shaft mounting members may be disposed on the first flexible transmission joint member 311, the second flexible transmission joint member 312, and the primary upper arm part 30. By connecting the rotation shaft member disposed on the shoulder member 2 to the corresponding rotation shaft mounting member disposed on the first flexible transmission joint member 31 and to one end of the primary upper arm part 30, and also by connecting the rotation shaft member disposed on the elbow member 4 to the corresponding rotation shaft mounting member disposed on the second flexible transmission joint member 312 and to the other end of the primary upper arm part 30, the rotational connection of corresponding members can also be achieved. Here, the structure of the first flexible transmission joint member 311 and the second flexible transmission joint member 312 depend on the type of the flexible transmission transfer member 310. For example, the first flexible transmission joint member 311 and the second flexible transmission joint member 312 are selected as wire wheels when the flexible transmission transfer member 310 is selected as a wire. The first flexible transmission joint member 311 and the second flexible transmission joint member 312 are selected as synchronous wheels when the flexible transmission transfer member 310 is selected as a synchronous belt. Obviously, the flexible transmission transfer member 310 is not limited to the wire and the synchronous belt, as long as the flexible transmission transfer member 310 can be sleeved over and fixedly connected to each of the first flexible transmission joint member 311 and the second flexible transmission joint member 312, and the flexible transmission transfer member 310, the first flexible transmission joint member 311 and the second flexible transmission joint member 312 can form a parallelogram structure under the support of the primary upper arm part 30 while satisfying the stiffness of the upper arm member 3 during movement. Here, the primary upper arm part 30 is rotatably connected to the shoulder member 2 and the elbow member 4 to form two upper arm rotational joints. According to the characteristics of the parallelogram connecting rod structure, the two upper arm rotational joints are coupled to rotate, and according to the effect of coupling, it can only provide one degree of freedom. Therefore, the two upper arm rotational joints together form one degree of freedom. The gravity balancing member 7 in Embodiment 1 is also applicable to this embodiment, and thus not specifically described again.

Accordingly, the present disclosure also discloses a robot, including the master arm.

Embodiments in the specification are all described in a progressive manner, and each embodiment focuses on differences from other embodiments, and the same or similar parts in the various embodiments may be referred accordingly at each embodiment.

In summary, in the master arm and the robot provided by the present disclosure, the master arm comprises: a support member; a shoulder member rotatably connected to the support member; an elbow member; an upper arm member rotatably connected to the shoulder member and the elbow member; and a forearm member connected to the elbow member, wherein the upper arm member comprises a primary upper arm part and a secondary upper arm part; a parallelogram can be formed by virtual lines sequentially connecting connection points of the primary upper arm part, the secondary upper arm part, the shoulder member, and the elbow member with straight lines; a first rotational joint is arranged between the support member and the shoulder member, a third rotational joint is arranged between the elbow member and the forearm member, and a second rotational joint is arranged between the primary upper arm part and the shoulder member, wherein an axis of the first rotational joint is parallel to an axis of the third rotational joint, and an axis of the second rotational joint is perpendicular to a plane defined by the axis of the first rotational joint and the axis of the third rotational joint. The master arm based on the parallelogram structure and the joint arrangement occupies littler space, has a more stable structure and higher stiffness, and can achieve complete balance of the self-gravity of the master arm, thereby improving the accuracy, flexibility, and comfort of the operation of the master arm.

The above description is only for the description of the preferred embodiments of the present disclosure, and is not intended to limit the scope of the present disclosure. Any changes and modifications made by those skilled in the art according to the above disclosure are all within the protection scope of the appended claims.

## Claims

1. A master arm, comprising: a support member; a shoulder member rotatably connected to the support member; an elbow member; an upper arm member rotatably connected to the shoulder member and the elbow member; and a forearm member rotatably connected to the elbow member, wherein,
the upper arm member comprises a primary upper arm part and a secondary upper arm part, and a parallelogram can be formed by virtual lines sequentially connecting connection points of the primary upper arm part, the secondary upper arm part, the shoulder member, and the elbow member;
a first rotational joint is arranged between the support member and the shoulder member, a second rotational joint is arranged between the primary upper arm part and the shoulder member, and a third rotational joint is arranged between the elbow member and the forearm member, wherein an axis of the first rotational joint is parallel to an axis of the third rotational joint, and an axis of the second rotational joint is perpendicular to a plane defined by the axis of the first rotational joint and the axis of the third rotational joint.

2. The master arm according to claim 1, wherein the primary upper arm part and the secondary upper arm part are selected as connecting rods.

3. The master arm according to claim 2, wherein the primary upper arm part and the secondary upper arm part are straight, and are parallel to each other.

4. The master arm according to claim 1, wherein the forearm member is horizontally disposed.

5. The master arm according to claim 1, wherein the primary upper arm part is a connecting rod, and the secondary upper arm part is a flexible transmission structure; the flexible transmission structure comprises a first flexible transmission joint member, a second flexible transmission joint member, and a flexible transmission transfer member sleeved over and fixedly connected to each of the first flexible transmission joint member and the second flexible transmission joint member; and the first flexible transmission joint member is fixedly connected to the shoulder member, and the second flexible transmission joint member is fixedly connected to the elbow member.

6. The master arm according to any one of claims 1 to 5, further comprising rotation shaft member and rotation shaft mounting member, wherein the forearm member and the elbow member are rotatably connected by means of a group of rotation shaft member and rotation shaft mounting member which are matched and connected, to form the third rotational joint.

7. The master arm according to any one of claims 1 to 5, further comprising rotation shaft member and rotation shaft mounting member, wherein the support member and the shoulder member are rotatably connected by means of a group of rotation shaft member and rotation shaft mounting member which are matched and connected, to form the first rotational joint.

8. The master arm according to any one of claims 1 to 5, further comprising rotation shaft member and rotation shaft mounting member, wherein the shoulder member and the upper arm member are rotatably connected by means of one or more groups of rotation shaft member and rotation shaft mounting member which are matched and connected; and the upper arm member and the elbow member are rotatably connected by means of another one or more groups of rotation shaft members and rotation shaft mounting members which are matched and connected.

9. The master arm according to claim 1, further comprising a posture adjustment member disposed on the forearm member.

10. The master arm according to claim 1, further comprising a gravity balancing member connected to the upper arm member.

11. The master arm according to claim 10, wherein the gravity balancing member is a counter weight, and the counter weight is connected to an extended section of the primary upper arm part.

12. A robot, comprising the master arm according to any one of claims 1 to 11.
